# EUROPEAN PATENT APPLICATION

(11) **EP 0 980 969 A2**
(43) Date of publication of application: **23.02.2000**
(21) Application number: 99116142.3
(22) Date of filing: 19.08.1999
(51) Int. Cl.: F02B 75/02

(54) **Method for operating a two-stroke in-cylinder injection engine and such an engine**

(30) Priority: 19.08.1998 JP 23278598
(71) Applicant: YAMAHA HATSUDOKI KABUSHIKI KAISHA, Iwata-shi Shizuoka-ken, 438 (JP)
(72) Inventor: Motoyama, Yu, Iwata-shi (JP); Nishimura, Hidehiro, Iwata-shi (JP); Maebashi, Kousei, Iwata-shi (JP)
(74) Representative: Grünecker, Kinkeldey, Stockmair & Schwanhäusser Anwaltssozietät

(57) **Abstract**

Method for operating a two-stroke in-cylinder injection engine having at least one combustion chamber (7), an intake passage means (8, 14, 18) for supplying at least air to said combustion chamber (7), and a fuel injection means (16, 17, 23) for injecting fuel (24) directly into said combustion chamber (7) and for injecting fuel into said intake passage means (8, 14, 18),wherein during engine starting operation a ratio between fuel injected into the intake passage means (8, 14, 18) and fuel into the combustion chamber (7) is variable.

## Description

This invention relates to a method for operating a two-stroke in-cylinder injection engine; especially to a starting method of a two-stroke in-cylinder injection engine and a two-stroke in-cylinder injection engine.

For two-stroke engines, an in-cylinder injection engine (direct injection engine) has been developed in which a fuel injection valve faces the cylinder and fuel is injected directly into the cylinder. This in-cylinder injection engine or direct injection engine is adapted to inject fuel into the cylinder at a timing no blow-by happens, so as to effect improved fuel consumption and decreased hazardous exhaust gas. The fuel injection pressure of this fuel injection valve is generated by an electromagnetic fuel pump or an engine driven pump.

However, since in the conventional in-cylinder injection engine, a large amount of fuel is injected directly into the cylinder with intake air choked during starting when the engine temperature is low and fuel is difficult to atomize, so that injected fuel in a state of liquid is deposited on the ignition plug to cause a dirty plug or a misfire, or inadequate formation of a mixture. Therefore, the state of combustion is deteriorated, resulting in black smoke and harmful exhaust gas emissions.

Also, in a high pressure fuel system in which fuel is injected at high pressure, the whole fuel system is required to have a volume larger than a certain value to decrease surging associated with fuel injection. Therefore, during starting, in either of the electromagnetic pump and engine driven pump, a predetermined time is necessary before the fuel pressure reaches a required value. In the electromagnetic pump, since electric current is consumed to drive the cell motor (and cell rotor) of the electromagnetic pump during starting, a problem is raised that sufficient current is difficult to secure for the pump. In the engine driven pump, it has a problem that the pressure is difficult to raise at the time of low engine speed. Therefore, in either pump, a considerable time is necessary before the fuel pressure reaches a specified required value during starting.

Because of the lack of fuel pressure during starting as described above, poor fuel atomization and larger particle size, together with low engine temperature, delays formation of a mixture, increasing the problems of the above described ignition plug wetting and black smoke emissions.

In the prior art, start control is performed to improve the startability, such as advancing the fuel injection timing, increasing the amount of fuel injection, or advancing the angle of ignition timing. However, the prior art start control is not sufficient enough to solve the above described problems.

From prior art document JP-9250429 a two-stroke engine is known. Said engine comprises a fresh air passage provided for communicating a crank chamber with a combustion chamber formed inside a cylinder hole . When a piston is slid, outside air is temporarily taken into the crank chamber to be preliminary compressed. The preliminary compressed air is supplied to the combustion chamber via the fresh air passage. A fuel injection port capable of supplying injection fuel toward the combustion chamber is formed on the cylinder. A communication path for communicating the fuel injection port with the inside of the crank chamber after a head of the piston passes the fuel injection port during a stroke up to a top dead center of the piston is formed on a skirt of the piston.

From prior art document US 5,251,582 a motorcycle powered by a two-cycle crankcase compression fuel injected internal combustion engine is known. The injection system for the engine includes a main fuel air/injector that injects fuel directly into the combustion chamber and a second or auxiliary fuel injector that injects fuel into the induction system for the engine. Control means control the fuel injectors so that the second or auxiliary fuel injector supplies fuel only during starting and high load, high speed conditions. The engine components are laid out in such a way that the spark plugs of the engine and the fuel injector will each be exposed to unobstructed air flow for cooling.

It is an objective of the present invention to provide a method for operating a two stroke in-cylinder engine and a two stroke in-cylinder engine having a stable engine operation and an improved fuel combustion.

According to the method aspect of the present invention said objective is solved by a method for operating a two-stroke in-cylinder injection engine having at least one combustion chamber, an intake passage means for supplying at least air to said combustion chamber, and a fuel injection means for injecting fuel directly into said combustion chamber and for injecting fuel into said intake passage means, said method comprises the steps of: injecting fuel into said combustion chamber by said fuel injection means under predetermined engine operating conditions to provide an air fuel mixture within said combustion chamber, injecting fuel into said intake passage means by said fuel injection means under predetermined engine operating conditions to provide an air fuel mixture within said intake passage means, wherein during engine starting operation a ratio between fuel injected into the intake passage means and fuel into the combustion chamber is variable according to at least one engine operating parameter.

According to the apparatus aspect of the present invention said objective is solved by a two-stroke in-cylinder injection engine comprising at least one combustion chamber, an intake passage means for supplying at least air to said combustion chamber and a fuel injection means for injecting fuel directly into said combustion chamber and for injecting fuel into said intake passage means under predetermined engine operating conditions, and a control unit for controlling a ratio between fuel injected into the intake passage means and fuel into the combustion chamber during a engine starting operation.

Preferred embodiments of the present invention are laid down in the dependent claims.

Accordingly, fuel atomization is accelerated to improve startability of the engine during starting when the engine temperature and fuel pressure are low.

Accordingly, a method for operating a two-stroke in-cylinder injection engine, especially for an engine starting operation is provided, wherein a two-stroke in-cylinder injection engine having a crankcase at one end of a cylinder with a piston sliding therein, a combustion chamber formed at the other end thereof, an intake passage in communication with said crankcase, and an injection valve facing said combustion chamber or cylinder, and at least part of fuel is injected into said crankcase or the intake passage upstream therefrom.

In this structure, since part or all of the fuel is injected into the crankcase or the upstream side therefrom during starting, by the time the fuel is injected into the crankcase or the upstream side therefrom the fuel is fully atomized due to sufficient contact with intake air and its dynamic flow effect, forming a mixture of high ignitability.

According to a preferred embodiment the ratio between fuel injected into the intake passage means and fuel injected into the combustion chamber is variable according to an engine temperature. Said engine temperature is detected by en engine temperature sensor and a control unit calculates and controls said ratio on the basis of the engine temperature.

Preferably the fuel injected into the combustion chamber (7) is variable between 0% and 100%. Thus, at the start of the engine starting operation all of the fuel is injected into the intake passage means (e.g. into the crank chamber). Further during the engine starting operation in-cylinder injection starts, wherein the amount of fuel injected into the combustion chamber increases and the amount of fuel injected into the intake passage means decreases on the basis of the engine temperature. Under high engine temperature operating condition the in-cylinder injection may also start at the start of the engine starting operation

According to a preferred embodiment of the present invention the two-stroke in-cylinder injection engine comprises a piston being upwardly and downwardly movable within a cylinder bore between a top dead center and a bottom dead center thereof, wherein said combustion chamber is defined by a top surface of said piston, said cylinder bore and a cylinder head, and the intake passage means comprises a crank chamber, an intake passage and a scavenging passage, wherein the crank chamber is connected and the intake passage and the scavenging passage being further connected with the combustion chamber for supplying at least air from to the combustion chamber assisted by the downward movement of the piston, and the fuel injection means comprises a fuel injection valve facing the cylinder bore through a fuel injection port, wherein a communication hole provided at a skirt section of the piston is in alignment with said fuel injection port when the piston is in a vicinity of the top dead center thereof providing a fuel injecting passage for injecting fuel into the crank chamber, and the fuel injection port is facing the combustion chamber when the piston is out of the vicinity of the top dead center thereof for injecting fuel directly into the combustion chamber. Thus, a single injection valve can be used for injecting fuel into the crank chamber and the combustion chamber.

In said preferred embodiment, the fuel injection valve is provided facing said cylinder, a communication hole is formed in the side of said piston, and fuel is injected into the crankcase or crank chamber from said fuel injection valve through said communication hole.

In this structure, a communication hole is formed in alignment with the fuel injection valve fitted to the side of the cylinder, and when the piston moves upward and the communication hole comes into alignment with the fuel injection valve, fuel is injected to be supplied through the communication hole from inside the piston into the crankcase.

In this case, since the throttle is closed to a minimum and the piston is moving toward the top dead center during starting, the crankcase is in the state of a strong negative pressure. Therefore, the pressure difference between fuel and the crankcase is larger than that between fuel and the cylinder during fuel injection into the cylinder, and atomization of fuel is accelerate by the large pressure difference.

Further, since the pressure difference between the injected fuel and the crankcase is large, only a small injection pulse width is necessary, decreasing electric power consumption in the case of the electromagnetic pump.

According to another preferred embodiment of the present invention the two-stroke in-cylinder injection engine comprises a piston being upwardly and downwardly movable within a cylinder bore between a top dead center and a bottom dead center thereof, wherein said combustion chamber is defined by a top surface of said piston, said cylinder bore and a cylinder head, and the intake passage means comprises a crank chamber, an intake passage and a scavenging passage, wherein the crank chamber is connected and the intake passage and the scavenging passage being further connected with the combustion chamber for supplying at least air to the combustion chamber assisted by the downward movement of the piston, and the fuel injection means comprises a first fuel injection valve facing the combustion chamber for injecting fuel directly into the combustion chamber and at least one second fuel injection valve facing the crank chamber or the intake passage for injecting fuel into the intake passage means. Thus, with the fuel injection means having the first and second fuel injection valve, the respective valve can be located at the crank chamber or the combustion chamber substantially independent from each other and the constructive freedom is increased. Furthermore with two fuel injection valves the operation load for one valve is decreased.

In said other preferred embodiment, a first fuel injection valve is provided facing said combustion chamber or cylinder and a second fuel injection valve is provided facing said crankcase or intake passage, and fuel is injected into said crankcase or intake passage by said second fuel injection valve.

In this structure, in addition to the first fuel injection valve for in-cylinder injection, the second fuel injection valve is provided facing the crankcase or the intake passage upstream from the crankcase, and fuel is injected from the second fuel injection valve into the crankcase of the intake passage during starting. As a result, by the time the fuel injected into the crankcase or the upstream side therefrom, flows into the cylinder, fuel is fully atomized due to sufficient contact with intake air and its dynamic flow effect, forming a mixture of high ignitability.

Hereinafter, the present invention is illustrated and explained by means of preferred embodiments in conjunction with the accompanying drawings. In the drawings wherein:
- Fig. 1: is a structural view of an embodiment of the two-stroke engine according to this invention,
- Fig. 2: is a side view of the piston section of the engine in Fig. 1,
- Fig. 3: is a block diagram of the control system of the engine according to this invention,
- Fig. 4: is a diagram showing the pressures in the cylinder and crankcase of the two-stroke engine,
- Fig. 5: is an illustration of the percentage of fuel injection into the crankcase and the cylinder of the engine according to this invention,
- Fig. 6: is a circular chart illustrating the opening durations of the fuel injection port and the exhaust port,
- Fig. 7: shows circular charts illustrating the percentages of fuel injection at the time ① through the time ⑥ in Fig. 5.

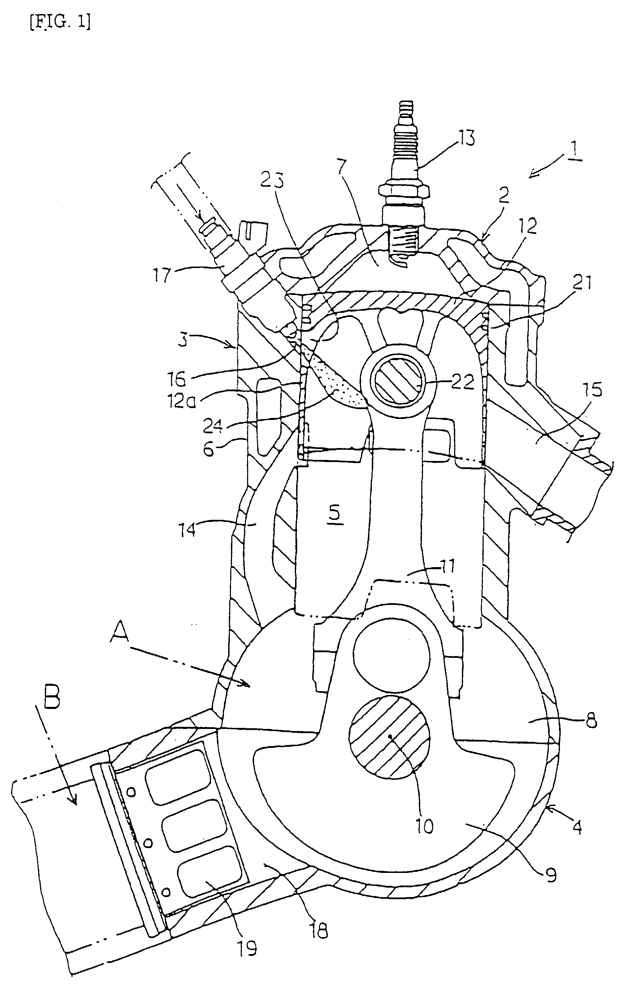

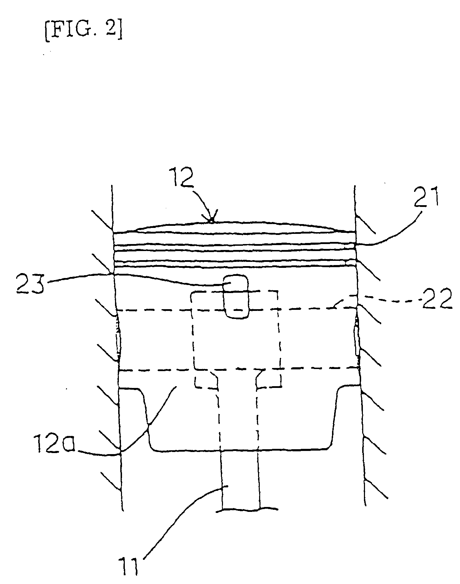

Fig. 1 is a structural view of an embodiment of the two-stroke in-cylinder injection engine according to this invention, and Fig. 2 is a side view of the piston.

A two-stroke engine 1 comprises a cylinder head 2, cylinder block 3, and crankcase 4 coupled together with bolts (not shown), etc. The cylinder block 3 has a cylinder section 6 formed with a cylinder bore 5, at the upper end of which is formed a combustion chamber 7 and at the lower end of which is formed a crank chamber 8. In the crank chamber 8 is provided a crankshaft 9 for rotation about its axial center 10.

A piston 12 is connected to the crankshaft 9 through a connecting rod 11 and a piston pin 22. The piston 12, fitted with piston rings, reciprocates in the cylinder bore 5 between the top dead center shown by the solid line and the bottom dead center shown by the double dot and dash line. Above the piston 12 at the top dead center is formed the combustion chamber 7, and in the cylinder head 2 at the top of the combustion chamber 7 an ignition plug 13 is fitted. A skirt section 12a is constituting a side of the piston 12. Said skirt section 12a is formed with a communication hole 23 in alignment with a fuel injection port 16 at a position in the vicinity of the top dead center of the piston 12.

The cylinder block 3 is formed with a scavenging passage 14 being open to the cylinder bore 5 in the vicinity of the bottom dead center of the piston 12, for providing communication between the crank chamber 8 and the cylinder bore 5. An exhaust port 15 is open to the cylinder bore 5.

In a portion of the cylinder section 6 opposite to the exhaust port 15 a fuel injection port 16 is formed, through which a fuel injection valve 17 is provided facing the cylinder bore 5.

The crank chamber 8 is in communication with an intake passage 18 through a reed valve 19. In the upstream side of the intake passage 18 from the reed valve 19 a throttle valve (not shown) is fitted for adjusting the amount of intake air through an air cleaner (not shown). The reed valve 19 is activated in response to the negative pressure in the crank chamber 8, causing throttled air to be drawn into the crank chamber.

In the two-stroke engine 1 described above, during usual running after warm-up, in a stroke in which the piston moves upward to compress the air within the cylinder, a predetermined amount of fuel corresponding to the injection time is injected into the cylinder above the top surface of the piston 12. When the piston is moving further upward toward the top dead center after the exhaust port 15 is closed, or at a predetermined timing that blow-by does not occur during opening of the exhaust port 15. The injected fuel forms a mixture with air in the cylinder to be compressed, and is ignited by the ignition plug 13 at a predetermined timing immediately before the top dead center, to be detonated. As a result of detonation, the pressure in the combustion chamber 7 rises and the piston is moved downward. The downward movement of the piston causes the air within the crank chamber to be compressed. When the piston is moved downward to open the exhaust port 15, combustion gas begins to be exhausted.

When the piston moves further downward to open the scavenging passage 14, compressed air in the crankcase flows into the cylinder through the scavenging passage 14 to push out combustion gas. The piston moves upward due to rotational inertia of the crankshaft 9 after reaching the bottom dead center, starting the compression stroke again. As the crank chamber 8 is in the state of negative pressure in the compression stroke, the reed valve 19 of the intake passage 18 is opened and throttled air is drawn into the crankcase. Fuel is injected in this compression and intake stroke as described above. This way, engine operation of two-stroke in-cylinder direct injection is repeated.

In such a two-stroke in-cylinder injection engine, in a first embodiment of this invention, fuel is injected into the crank chamber 8 through the communication hole 23 provided in the skirt section 12a of the piston 12 to improve startability during engine starting. That is, with the help of injection timing control of the fuel injection valve 17, fuel 24 is injected, as shown in Fig. 1 when the top surface of the upwardly moving piston 12 in the compression and intake stroke, crosses over the fuel injection port 16 to approach the top dead center, wherein the fuel injection port 16 is overlapping and in communication with the communication hole 23 formed in the skirt section 12a of the piston 12. At this moment, the piston 12 is moving upward in the vicinity of the top dead center and the inside of the piston, and the underlying cylinder bore 5 and crank chamber 8 in communication therewith are in a state of strong negative pressure. Therefore, because of the great pressure differences between injected fuel and these spaces together with an agitation effect due to air flow in the crankcase, atomization of fuel and formation of a mixture with air in the crankcase are accelerated.

The percentage of the amount of fuel injection into the crankcase and the cylinder will be described later.

In this way, when the piston 12 moves downward to open the scavenging passage 14 in the preceding detonation and exhaust stroke by the mixture in the cylinder, a mixture formed in the crankcase is supplied into the cylinder. Thereafter, said mixture within the cylinder is compressed in the succeeding compression stroke, and ignited immediately before the top dead center, to be detonated. As describe above, fuel is injected into the crankcase once and supplied into the cylinder from the crankcase through the scavenging passage. Therefore, flow path of fuel is lengthened as well as the length of time from injection to ignition, thus further accelerating atomization of fuel and formation of a mixture. Thus, the fuel, which is fully atomized and turned into a good mixture, improves its ignitability of ignition, providing quick engine starting.

Now, a second embodiment of this invention will be described. In the foregoing first embodiment, a fuel injection valve for in-cylinder injection is provided in the side wall of the cylinder and a communication hole is formed in the piston skirt section so as to inject fuel in the crankcase through the communication hole in the piston skirt section with the help of injection timing control of the fuel injection valve. Instead of such a structure, another fuel injection valve may be provided for injecting fuel in the crankcase or the upstream side therefrom in addition to the fuel injection valve for in-cylinder injection, so as to inject fuel in the crankcase or the upstream side therefrom at a predetermined timing. That is, a first fuel injection valve 17 for in-cylinder injection facing the cylinder or the combustion chamber is provided in the side wall of the cylinder, and a second fuel injection valve is provided at a position directly facing the crank chamber 8, as shown by A in Fig. 1, or at a position in the upstream side of the intake passage 18 from the second valve 19 and in the downstream side from the throttle valve as shown by B in Fig. 1. In this case, it is not necessary to form the communication hole 23 in the skirt section 12a of the piston 12.

During engine starting, fuel is injected directly into the crank chamber 8 or in the intake passage upstream from the crank chamber at a predetermined timing in the compression and intake stroke of the upwardly moving piston. Thus, the fuel injected directly into the crank chamber or drawn into the crank chamber through the intake passage, is accelerated, as in the foregoing embodiment, in atomization in the crank chamber and formation of a mixture. Thereby, improved ignitability of fuel as well as quick engine starting is provided.

When the second fuel injection valve is provided as described above, the first fuel injection valve may be fitted in the cylinder head facing the combustion chamber instead of the cylinder inside wall.

In either embodiment, after the engine has reached the state of warm-up after starting, in-cylinder injection is performed in the low load range through intermediate load range, and in the high load range, fuel is injected also into the crankcase in combination with in-cylinder injection, effecting improved output power. That is, in an arrangement in which the fuel injection valve is provided in the side wall of the cylinder and the communication hole in the piston skirt section, during engine operation at high speed and high load, fuel is injected directly into the cylinder as well as into the crankcase through the communication hole, so that a large amount of fuel can be supplied in a short time without deterioration of atomization and formation of a mixture, effecting improvement of output power and fuel consumption.

In an arrangement with a first fuel injection valve for in-cylinder injection and the second fuel injection valve for intake passage injection, similar to the foregoing arrangement, fuel is injected directly into the cylinder from the first fuel injection valve and also into the crankcase or intake passage from the second fuel injection valve during engine operation at high speed and high load, so that a large amount of fuel can be supplied in a short time without deterioration of atomization and formation of a mixture, effecting improvement of output power and fuel consumption.

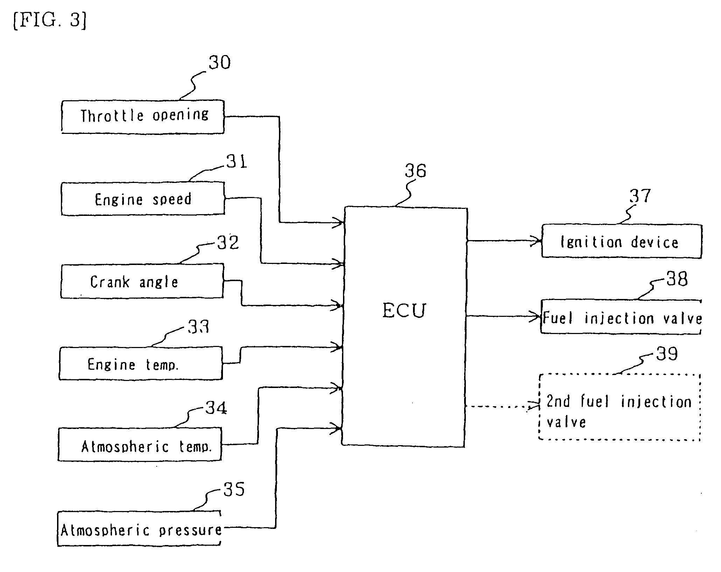

Fig. 3 is a block diagram of the control system for carrying out the fuel injection method according to the foregoing embodiments. The data detected from a plurality of sensors for detecting the engine running state, such as a throttle opening sensor 30, an engine speed sensor 31, a crank angle sensor 32, an engine temperature sensor 33, an atmospheric temperature sensor 74, and an atmospheric pressure sensor 35 are inputted to a control unit (ECU) 36 as shown in the figure. In response to these data, the control unit 36 is adapted to drive an ignition device 37 and a fuel injection valve 38 (also a second fuel injection valve 39 in the foregoing second embodiment), based on maps made in advance, to control the ignition timing, amount of fuel injection, and fuel injection timing. According to throttle opening and engine speed the maps (three-dimensional maps, for example) are provided for the ignition timing, fuel injection timing, and injection time, respectively. The control unit is adapted to perform map-calculations based on throttle opening and engine speed, and corrective calculation based on the data of engine temperature and atmospheric pressure to control the ignition timing and fuel injection.

In this invention, maps during starting are provided in addition to the maps during usual running after warm-up, and the ignition timing and fuel injection control are performed, during engine starting, according to throttle opening and engine speed using maps for starting. In this case, for the first embodiment, maps are arranged such that the fuel injection timing is a timing at which fuel can be injected into the crankcase from the fuel injection valve through the communication hole in the piston skirt section, as described above. For the second embodiment, maps are arranged such that the fuel injection timing is a timing at which fuel can be injected into the crankcase from the second fuel injection valve in the compression and intake stroke or a timing at which fuel is injected into the intake passage so as to be drawn into the crankcase with a highest efficiency in synchronization with opening/closing of the reed valve. Also for the ignition timing and the amount (time) of fuel injection, maps are made with optimum values to improve startability. Further, as described above, additional maps in the high speed and high throttle opening range may be provided for additional fuel injection into the crankcase together with in-cylinder injection during high speed and high load operation.

The time the engine is started, can be determined from the lapse of time after switching-on of the main switch or the engine temperature.

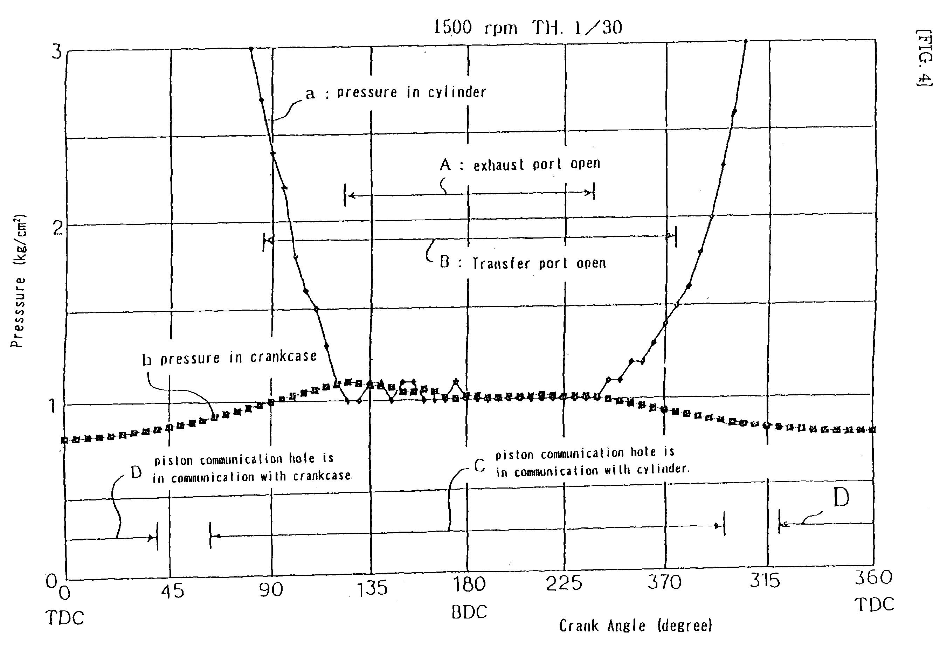

Fig. 4 is a diagram showing the pressures in the cylinder and crankcase, and the opening duration of ports. The horizontal axis represents the crank angle, and the vertical axis the pressure, (a) showing the pressure in the cylinder, and (b) the pressure in the crankcase. As shown by A, the scavenging port is open in the vicinity of the bottom dead center, and as shown by B, the exhaust valve is open in a wider range than A. C represents the duration that the fuel injection port is open to the cylinder. The duration C is a time during which the fuel injection port is above the top surface of the piston, and the opening duration is longer than the opening duration B of the exhaust port because of the fuel injection port being located higher than the exhaust port. D represents the duration that the fuel injection port is in communication with the communication hole in the piston skirt section to be open to the crankcase, and the fuel injection port is opened at a position in the vicinity of the top dead center corresponding to the position or the size of the communication hole. As described above, in the first embodiment, fuel is injected into the crankcase through the communication hole in the piston skirt section in the duration D during starting.

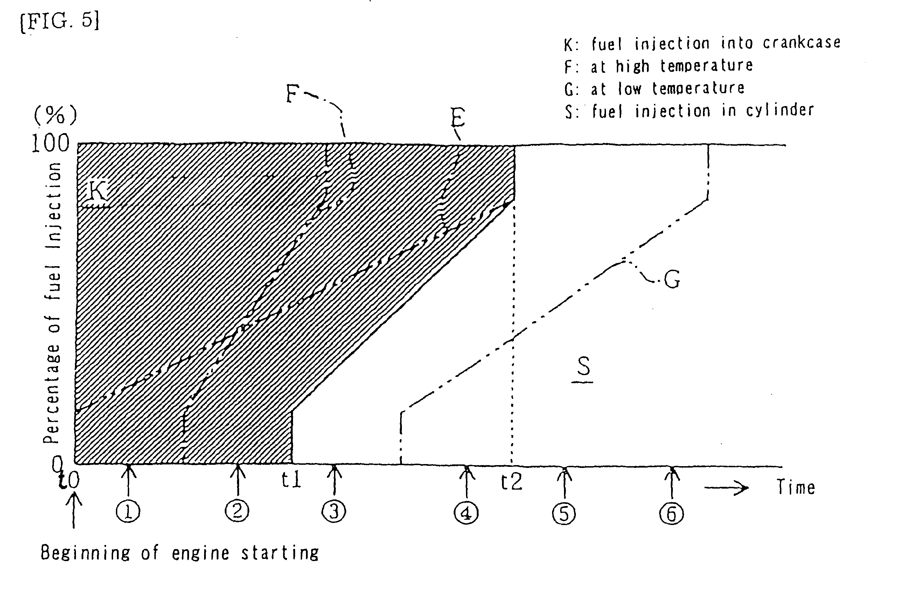

Fig. 5 is an illustration of the percentage of fuel injection during starting according to this invention. The horizontal axis represents the lapse of time after starting, and the vertical axis the percentage of fuel injection into the crankcase and the cylinder. The hatched region K is an area where fuel is injected into the crankcase, and the region S without hatching is an area where fuel is injected into the cylinder. As shown in the figure, the full amount of fuel is injected into the crankcase from the beginning of starting t0 till the time t1. Injection into the cylinder begins from the time t1 and increases its percentage gradually, and injection into the crankcase is finished at the time t2 with the full amount of fuel injected into the cylinder. Regarding this injection percentage, some amount of fuel may also be injected into the cylinder from the beginning of engine starting, and the percentage of in-cylinder injection may be increased gradually, as shown by the line E. Alternatively, because of a good startability being expected at the time the engine temperature is high, the injection into the crankcase is shortened and changed to the injection into the cylinder in an early stage, as shown by the line F. On the other hand, at the time of poor startability when the engine temperature is low, the duration of injection into the crankcase is lengthened, as shown by the line G.

Accordingly, the engine starting operation is defined by a first period of time from t0 to t2 which starts with a starting point t0 of the engine starting operation and fuel is injected into the intake passage means (e.g. the crank chamber 8 or the intake passage 18) and the combustion chamber 7 within a second period of time from t1 to t2 being at least part of said first period of time. Said fuel injection into the intake passage means (e.g. the crank chamber 8 or the intake passage 18) and the combustion chamber 7 starts at a first point t1 of the engine starting operation. Based on the engine temperature said first point t1 is equal with the starting point t0 at high temperature, and later than the starting point t0 at mid and low temperature.

Thus, fuel is injected only into said intake passage means (e.g. the crank chamber 8 or the intake passage 18) from the starting point t0 to the first point t1 of the engine starting operation at mid and low temperature.

Furthermore, within the second period of time from t1 to t2 fuel amount injected into said intake passage means is decreased and fuel amount injected into said combustion chamber (7) is increased.

Preferably, the total amount of fuel being injected into said intake passage means and said combustion chamber (7) is substantially constant for any time point of the engine starting operation.

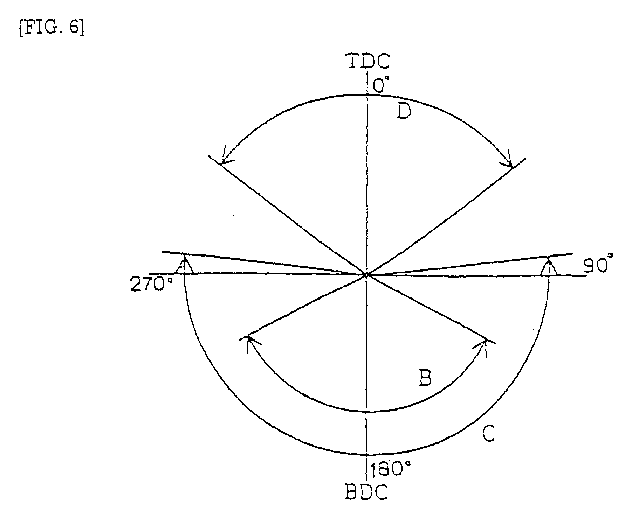

Fig. 6 is a circular chart illustrating the opening duration of the fuel injection port with respect to the crankcase and the cylinder, and that of the exhaust port. D represents the duration the fuel injection port is in communication with the crankcase through the communication hole in the side wall of the piston. C represents the duration the fuel injection port is open to the cylinder. B represents the duration the exhaust port is opened. These durations D, C, B correspond to the same ones D, C, B as in the Fig. 4.

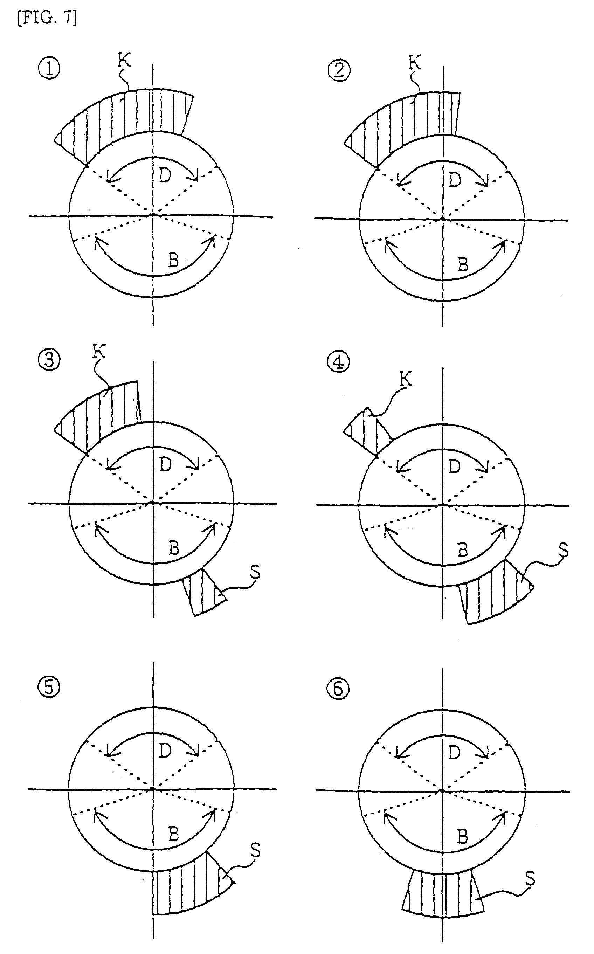

Fig. 7 shows percentages of fuel injection into the crankcase and the cylinder at the time ① through the time ⑥ in Fig. 5, illustrated by circular charts similar to the one in Fig. 6. The hatched portion represents the fuel injection range, K the injection into the crankcase, and S the injection into the cylinder.

At the time ①, fuel injection is started at the same time the fuel injection port is opened through the communication hole in the side wall of the piston, and the full amount of fuel is injected into the crankcase. The engine temperature rises with time. The amount of fuel injection is decreased with engine temperature rise, so that it is smaller at the time ② than at the time ①. At the time ③, the amount of fuel injection into the crankcase is decreased further, and injection into the cylinder is started at a predetermined timing. In this case, fuel is injected at a timing earlier than usual, and the time from injection to ignition is increased to accelerate atomization. At the time ④, the percentage of in-cylinder injection is increased, and the whole amount of fuel is decreased with engine temperature rise. At the time ⑤, injection into the crankcase is finished, and the full amount of fuel is injected into the cylinder. At the time ⑥, the amount of fuel injection is decreased with engine temperature rise, and the ignition timing which has been advanced for acceleration of atomization, is returned to the ordinary one to prevent blow-by.

As described above, according to this embodiment, during starting when the engine temperature and fuel pressure are low, at least part of fuel is injected into the crankcase or the upstream side therefrom in the state of a strong negative pressure, so that atomization of fuel and formation of a mixture can be accelerated due to long flowing time as well as dynamic flow in the crankcase, thereby improving startability and preventing a dirty plug and black smoke during starting.

A starting method of a two-stroke in-cylinder injection engine is provided in which in a two-stroke engine with a fuel injection valve is adapted to inject fuel directly into the cylinder, fuel atomization is accelerated to improve startability of the engine during starting when the engine temperature and the fuel pressure are low.

A starting method of a two-stroke in-cylinder injection engine having a crank chamber 8 at one end of a cylinder 5 with a piston 12 sliding therein, a combustion chamber 7 formed at the other end thereof, an intake passage 18 in communication with said crank chamber 8, and an injection valve 17 facing said combustion chamber or cylinder, wherein at least part of the fuel is injected into said crank chamber 8 or the intake passage 18 upstream therefrom.

According to the starting method of a two-stroke in-cylinder injection engine, said fuel injection valve is provided facing said cylinder, a communication hole is formed in the side of said piston, and fuel is injected into the crankcase from said fuel injection valve through said communication hole.

According to the starting method of a two-stroke in-cylinder injection engine, a first fuel injection valve is provided facing said combustion chamber or cylinder, and a second fuel injection valve facing said crankcase or intake passage, and fuel is injected into said crankcase or intake passage by said second fuel injection valve.

## Claims

1. Method for operating a two-stroke in-cylinder injection engine having at least one combustion chamber (7), an intake passage means (8, 14, 18) for supplying at least air to said combustion chamber (7), and a fuel injection means (16, 17, 23) for injecting fuel (24) directly into said combustion chamber (7) and for injecting fuel into said intake passage means (8, 14, 18), said method comprises the steps of:
injecting fuel into said combustion chamber (7) by said fuel injection means under predetermined engine operating conditions to provide an air fuel mixture within said combustion chamber (7),
injecting fuel into said intake passage means (8, 14, 18) by said fuel injection means under predetermined engine operating conditions to provide an air fuel mixture within said intake passage means (8, 14, 18),
wherein during engine starting operation a ratio between fuel injected into the intake passage means (8, 14, 18) and fuel into the combustion chamber (7) is variable according to at least one engine operating parameter.

2. Method for operating a two-stroke in-cylinder injection engine according to claim 1, **characterized in that** the ratio between fuel injected into the intake passage means (8, 14, 18) and fuel injected into the combustion chamber (7) is variable according to an engine temperature.

3. Method for operating a two-stroke in-cylinder injection engine according to claim 1 or 2, **characterized in that** the fuel injected into the combustion chamber (7) is variable between 0% and 100%.

4. Method for operating a two-stroke in-cylinder injection engine according to one of the claims 1 to 3, **characterized in that** an engine starting operation is defined by a first period of time (t0 - t2) which starts with a starting point (t0) of the engine starting operation and fuel is injected into the intake passage means (8, 14, 18) and the combustion chamber (7) within a second period of time (t1 - t2) being at least part of said first period of time (t0 - t2) and starts at a first point (t1) of the engine starting operation, wherein said first point (t1) is equal with or later than the starting point (t0) in accordance with an engine temperature.

5. Method for operating a two-stroke in-cylinder injection engine according to claim 4, **characterized by** injecting fuel only into said intake passage means (16, 17, 23) from the starting point (t0) to the first point (t1) of the engine starting operation.

6. Method for operating a two-stroke in-cylinder injection engine according to claim 4 or 5, **characterized in that** within the second period of time (t1 - t2) fuel amount injected into said intake passage means (8, 14, 18) is decreased and fuel amount injected into said combustion chamber (7) is increased.

7. Method for operating a two-stroke in-cylinder injection engine according to one of the claims 4 to 6, **characterized in that** said first point (t1) is substantial equal with said starting point (t0) under high temperature engine starting operation, and said first point (t1) is later than said the starting point (t0) under mid temperature engine starting operation, wherein the first point (t1) under low temperature engine starting operation is later than the first point (t1) under mid temperature engine starting operation.

8. Method for operating a two-stroke in-cylinder injection engine according to one of the claims 1 to 7, **characterized in that** a total amount of fuel being injected into said intake passage means (16, 17, 23) and said combustion chamber (7) is substantial constant for any time point of the engine starting operation.

9. Two-stroke in-cylinder injection engine comprising at least one combustion chamber (7), an intake passage means (8, 14, 18) for supplying at least air to said combustion chamber (7) and a fuel injection means (8, 14, 18) for injecting fuel directly into said combustion chamber (7) and for injecting fuel into said intake passage means under predetermined engine operating conditions, and a control unit (36) for controlling a ratio between fuel injected into the intake passage means (8, 14, 18) and fuel into the combustion chamber (7) during a engine starting operation.

10. Two-stroke in-cylinder injection engine according to claim 9 **characterized by** an engine temperature sensor (33) for detecting an engine temperature, wherein the ratio between fuel injected into the intake passage means (8, 14, 18) and fuel into the combustion chamber (7) during a engine starting operation is controllable by the control unit (36) on bases of the engine temperature.

11. Two-stroke in-cylinder injection engine according to claim 9 or 10 **characterized by** a piston (12) being upwardly and downwardly movable within a cylinder bore (5) between a top dead center and a bottom dead center thereof, wherein said combustion chamber (7) is defined by a top surface of said piston (12), said cylinder bore (5) and a cylinder head (2), and the intake passage means comprises a crank chamber (8), an intake passage (18) and a scavenging passage (14), wherein the crank chamber (8) is connected and the intake passage (18) and the scavenging passage (14) being further connected with combustion chamber (7) for supplying at least air from to the combustion chamber (7) assisted by the downward movement of the piston (12), and
the fuel injection means comprises a fuel injection valve (17) facing the cylinder bore (5) through a fuel injection port (16), wherein a communication hole (23) provided at a skirt section (12a) of the piston (12) is in alignment with said fuel injection port (16) when the piston (12) is in a vicinity of the top dead center thereof providing a fuel injecting passage for injecting fuel into the crank chamber (8), and the fuel injection port (16) is facing the combustion chamber (7) when the piston (12) is out of the vicinity of the top dead center thereof for injecting fuel directly into the combustion chamber (7).

12. Two-stroke in-cylinder injection engine according to claim 9 or 10 **characterized by** a piston (12) being upwardly and downwardly movable within a cylinder bore (5) between a top dead center and a bottom dead center thereof, wherein said combustion chamber (7) is defined by a top surface of said piston (12), said cylinder bore (5) and a cylinder head (2), and the intake passage means comprises a crank chamber (8), an intake passage (18) and a scavenging passage (14), wherein the crank chamber (8) is connected with the intake passage (18) and the scavenging passage (14) being further connected with the combustion chamber (7) for supplying at least air to the combustion chamber (7) assisted by the downward movement of the piston (12), and
the fuel injection means comprises a first fuel injection valve (17) facing the combustion chamber (7) for injecting fuel directly into the combustion chamber (7) and at least one second fuel injection valve facing the crank chamber (8) or the intake passage (18) for injecting fuel into the intake passage means.
